# EUROPEAN PATENT APPLICATION

(11) **EP 4 848 439 A1**
(43) Date of publication of application: **02.12.2026**
(21) Application number: 25861233.2
(22) Date of filing: 12.08.2025
(51) Int. Cl.: H01M 50/258, H01M 50/211, H01M 50/317, H01M 50/502, H01M 50/244, B60K 1/04, B60L 50/60

(54) **BATTERY PACK, AND VEHICLE INCLUDING SAME**

(30) Priority: 27.08.2024 KR 20240115295
(71) Applicant: LG Energy Solution, Ltd., Seoul 07335 (KR)
(72) Inventor: PARK, Jun-Hee, Daejeon 34122 (KR); HWANG, Jae-Cheol, Daejeon 34122 (KR)
(74) Representative: Plasseraud IP
(86) International application number: PCT/KR2025/012244
(87) International publication number: WO 2026/049372

(57) **Abstract**

The present disclosure may provide a battery pack including a cell array that includes a plurality of battery cells, and a pack case assembly that includes a plurality of pack cases configured to accommodate at least one of the cell arrays and arranged in a row, wherein the cell array is configured to be inserted into the pack case in a first direction, and wherein the pack cases are connected in a second direction perpendicular to the first direction.

## Description

### TECHNICAL FIELD

The present disclosure relates to a battery pack and a vehicle including the same.

This application is based on and claims priority from Korean Patent Application No. 10-2024-0115295, filed on August 27, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources.

Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

A common method for configuring a battery pack by connecting multiple battery cells in series/parallel is performed by preferentially configuring a battery module including at least one battery cell and then by adding other components to at least one battery module to configure a battery pack or battery rack. In this case, the battery cells are packaged into modules, and the battery modules are packaged into a battery pack. Finally, the battery packs are installed in the vehicle, but only the battery cells are used to supply power. This excessive packaging not only requires the design and production of additional components, but also takes up additional space, thereby reducing the space utilization of the battery cells. In addition, cell-to-pack-type battery packs are being manufactured, where multiple battery cells are stored directly in the pack housing, rather than modularized.

With the increasing capacity of electric vehicle batteries, there is a growing need to develop battery packs that maximize space utilization to increase energy density, minimize the number of components used, and simplify the assembly process while maintaining vehicle space.

### DISCLOSURE

### Technical Problem

The present disclosure is designed to solve the problems of the related art, and therefore the present disclosure is directed to providing a cell-to-chassis-type battery pack in which the battery pack and vehicle chassis are integrated, enabling the cell array to be directly mounted to the vehicle chassis.

In addition, the present disclosure is also directed to providing a battery pack with enhanced stability by allowing venting gases generated due to thermal events to be discharged downward from the battery pack.

In addition, the present disclosure is also directed to providing a battery pack in which the structure of the pack case is simplified and the case is modularized for ease of manufacture, thereby facilitating assembly and disassembly and allowing easy expansion and reduction to correspond to the size of the vehicle.

In addition, the present disclosure is also directed to providing a battery pack that accommodates the cell array within the pack case in a sliding manner, thereby allowing for easy replacement of a defective cell array with a new one.

In addition, the present disclosure is also directed to providing a vehicle that includes such a battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including a cell array that includes a plurality of battery cells, and a pack case assembly that includes a plurality of pack cases configured to accommodate at least one of the cell arrays and arranged in a row, wherein the cell array is configured to be inserted into the pack case in a first direction, and wherein the pack cases are connected in a second direction perpendicular to the first direction.

The pack case assembly may be configured to be directly mounted to a chassis of a vehicle.

The pack case may be configured as a rectangular tube with an opening formed at a front or rear side facing the first direction.

The cell array may be configured to slide into the pack case through the opening.

The pack case may be formed using at least one of extrusion, forging, pressing, and casting.

The pack cases constituting the pack case assembly may be configured to be welded to each other.

The pack cases are sequentially coupled so that a size of the pack case assembly is increased in the second direction.

The battery pack may further include at least one venting valve positioned to pass through at least one venting hole formed in one side of the pack case.

The venting valve may be configured to penetrate a lower plate of the case.

The battery pack may further include a cap configured to cover the opening and be attached to and detached from the pack case.

The battery pack may further include a busbar assembly electrically connected to an electrode lead of the battery cell, and the busbar assembly may include a busbar terminal positioned below the battery cell and configured to be coupled to the electrode lead.

The busbar assembly may further include a busbar connector configured to connect the busbar terminals disposed in different pack cases, and the busbar connector may be configured to pass through a hole formed in the cap and be connected outside the cap.

The battery pack may further include a side member configured to be directly coupled to the pack case assembly.

The side member may be a chassis of a vehicle.

In another aspect of the present disclosure, there is provided a vehicle including a battery pack according to the present disclosure.

In another aspect of the present disclosure, there is provided a vehicle including a cell array that includes a plurality of battery cells, and a pack case assembly that includes a plurality of pack cases configured to accommodate at least one of the cell arrays and arranged in a row, wherein the cell array is configured to be inserted into the pack case in a first direction, wherein the pack cases are connected in a second direction perpendicular to the first direction, and wherein the pack case assembly is configured to be directly mounted to a chassis of the vehicle.

### Advantageous Effects

According to one aspect of the present disclosure, the case assembly and/or side members constituting the battery pack can be directly coupled to the vehicle chassis or utilized as the vehicle chassis. That is, the cell array can be mounted directly to the vehicle chassis. This allows for increased energy density, improved space utilization, reduced weight, and reduced costs while maintaining the structure and size of the vehicle.

In addition, according to another aspect of the present disclosure, directional venting can be implemented to discharge venting gases generated due to thermal events downward from the battery pack, thereby efficiently dissipating the pressure and thermal energy inside the battery pack, and thus delaying the thermal propagation to neighboring cell arrays and enhancing safety.

In addition, according to another aspect of the present disclosure, it is possible to simplify the pack case structure and modularize the case for easier manufacturing. Since a plurality of pack cases modularized as described above are sequentially connected, assembly can be simplified, customization can be achieved to accommodate various vehicle sizes, and parts commonality can contribute to cost reduction.

In addition, according to another aspect of the present disclosure, the cell array is inserted into the pack case in a sliding manner, thereby easing and simplifying assembly and coupling. In addition, when a defective cell array is stored, it is easy to replace it with a new one.

In addition, according to another aspect of the present disclosure, events resulting from thermal runaway in a vehicle including a plurality of battery packs, such as fire or explosion, can be prevented or delayed.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a front perspective view of a battery pack according to an embodiment of the present disclosure.
FIG. 2 is a rear perspective view of a battery pack according to an embodiment of the present disclosure.
FIG. 3 is an exploded perspective view of a battery pack according to an embodiment of the present disclosure.
FIG. 4 is a perspective view of a pack case according to an embodiment of the present disclosure.
FIG. 5 is a front view of a pack case according to an embodiment of the present disclosure.
FIG. 6 is a drawing illustrating a cell array being inserted into a pack case according to an embodiment of the present disclosure.
FIG. 7 is a view illustrating a cell array inserted into a pack case according to an embodiment of the present disclosure.
FIG. 8 is a drawing illustrating a plurality of pack cases 210 arranged according to an embodiment of the present disclosure.
FIG. 9 is a perspective view illustrating a plurality of pack cases and cell arrays according to an embodiment of the present disclosure.
FIG. 10 is a perspective view illustrating a pack case equipped with a venting valve according to an embodiment of the present disclosure.
FIG. 11 is an exploded perspective view of a pack case equipped with a venting valve according to an embodiment of the present disclosure.
FIG. 12 is a front view of a pack case equipped with a venting valve according to an embodiment of the present disclosure.
FIG. 13 is a perspective view illustrating a battery pack including a cap according to an embodiment of the present disclosure.
FIG. 14 is a perspective view illustrating a battery pack including a cap according to another embodiment of the present disclosure.
FIG. 15 is a front perspective view of a battery pack including a busbar assembly according to an embodiment of the present disclosure.
FIG. 16 is a rear perspective view of a battery pack including a busbar assembly according to another embodiment of the present disclosure.
FIG. 17 is a perspective view illustrating a lower surface of a pack case and a busbar assembly according to an embodiment of the present disclosure.
FIG. 18 is a drawing illustrating a busbar connector according to an embodiment of the present disclosure.
FIG. 19 is a top view of a busbar assembly disposed on a lower surface of a pack case according to an embodiment of the present disclosure.
FIG. 20 is a drawing illustrating a cell array and a busbar assembly connected according to an embodiment of the present disclosure.
FIG. 21 is a drawing illustrating a portion of a battery pack including a front connector according to an embodiment of the present disclosure.
FIG. 22 is a perspective view illustrating a battery pack including a side member according to an embodiment of the present disclosure.
FIG. 23 is a perspective view illustrating a side member according to an embodiment of the present disclosure.
FIG. 24 is a front view illustrating a cell array inserted into a pack case according to an embodiment of the present disclosure.
FIG. 25 is a perspective view illustrating a cell array according to an embodiment of the present disclosure.
FIG. 26 is a bottom perspective view of a cell array according to an embodiment of the present disclosure.
FIG. 27 is an exploded perspective view of a cell array according to an embodiment of the present disclosure.
FIG. 28 is a perspective view of an absorption member according to an embodiment of the present disclosure.
FIG. 29 is a perspective view of an absorption member according to another embodiment of the present disclosure.
FIG. 30 is a perspective view of individual absorption members mounted to opposing cell arrays according to an embodiment of the present disclosure.
FIG. 31 is a side cross-sectional view illustrating cell arrays and absorption members facing each other and coupled according to an embodiment of the present disclosure.
FIG. 32 is a schematic drawing of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

In addition, for purposes of better understanding the present disclosure, the accompanying drawings are not necessarily drawn to scale, and the dimensions of certain elements may be exaggerated for clarity. In addition, the same reference numerals may indicate the same elements across different embodiments.

Ordinal terms such as "first," "second," and the like may be used to describe various components, but the components are not limited by these terms. These terms are used solely to distinguish one component from another. Therefore, unless explicitly stated otherwise, a first component may be the same as a second component.

Throughout the specification, unless otherwise expressly stated, each component may be singular or plural.

Hereinafter, the configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected,' 'coupled,' or 'joined' to another element" should be understood that the two elements may be directly connected or joined to each other, and that another element may be "interposed" between the two elements, or that the two elements may be "connected," "coupled," or "joined" via another element.

A single element used herein should be construed to encompass a plurality of elements, unless stated otherwise. In this specification, the expression "one component 'is configured as' or 'includes' elements or steps" should not be understood that the component must all of the elements or steps, and should be understood that the component may exclude some of the elements or steps and that the component may further include additional elements or steps.

Throughout the specification, unless otherwise stated, the expression "A and/or B" may refer to A, B, or both A and B.

Meanwhile, in this specification, unless specifically stated, the Y-axis direction in which multiple cell arrays are stacked may indicate a front-back direction, the X-axis direction, which is a horizontal direction, perpendicular to on the stacking direction of the cell arrays may indicate a left-right direction, and the Z-axis direction perpendicular to the X-Y plane may indicate an up-down direction (vertical direction). In addition, the left-right direction, front-back direction, and up-down direction may be referred to as a first direction, second direction, and third direction.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position, arrangement, or rotation of the target object or the position of the observer.

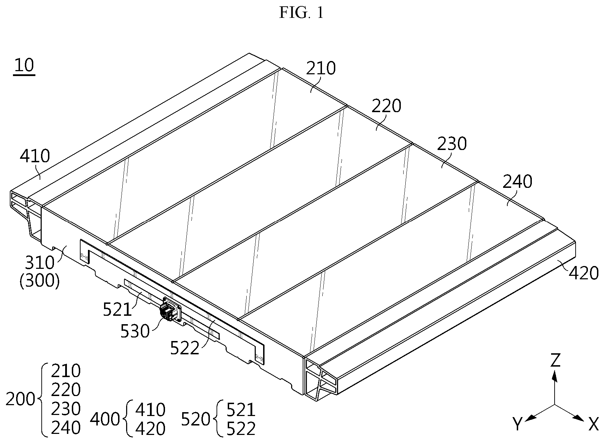

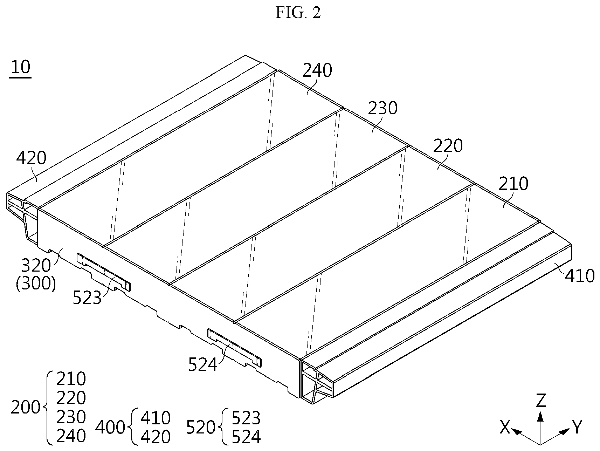

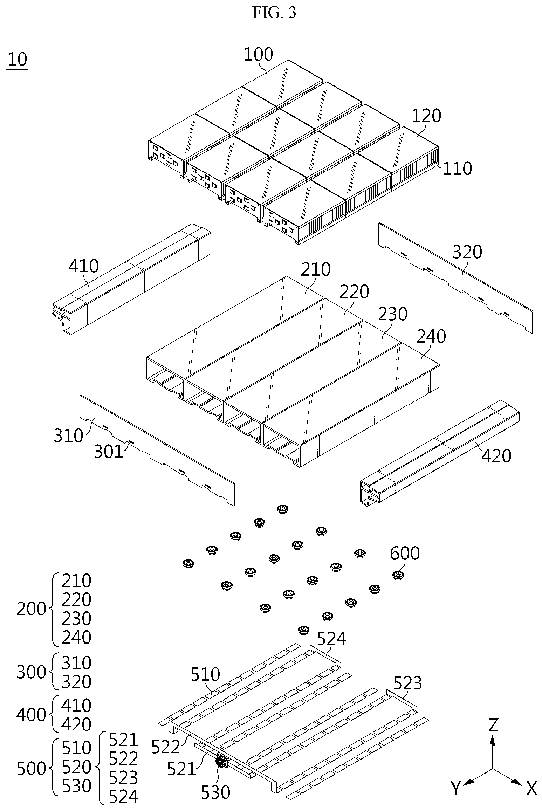

FIG. 1 is a perspective view of a battery pack 10 when viewed from the front (in the +Y-axis direction) according to an embodiment of the present disclosure. FIG. 2 is a perspective view of a battery pack 10 when viewed from the rear (in the -Y-axis direction) according to an embodiment of the present disclosure. FIG. 3 is an exploded perspective view of a battery pack 10 according to an embodiment of the present disclosure.

Referring to FIGS. 1 to 3, a battery pack 10 according to an embodiment of the present disclosure may include a cell array 100, a pack case assembly 200, a cap 300, a side member 400, a busbar assembly 500, and a venting valve 600.

The cell array 100 may include a plurality of battery cells 110. The cell array 100 may further include a module cover 120. In this case, according to an embodiment, the cell array 100 may be defined as a battery module.

A plurality of cell arrays 100 may be provided. The plurality of cell arrays 100 may be stacked on each other. The plurality of cell arrays 100 may be stacked in the horizontal direction. The cell array 100 may have various structures, and the plurality of cell arrays 100 may be stacked in various ways. The number and stacking method of the cell arrays 100 may be designed in various ways depending on the size of the battery accommodation space of a vehicle to which they are applied.

The pack case assembly 200 may be configured with a plurality of pack cases 210 arranged in a row. The pack case 210 may be configured to accommodate at least one cell array 100. Specifically, the pack case 210 may have an inner space formed therein, and the cell array 100 may be accommodated in the inner space. A plurality of pack cases 210 may be provided. The plurality of pack cases 210 may be arranged side by side in one direction.

According to an embodiment, the pack case assembly 200 may include a first pack case 210, a second pack case 220 positioned next to the first pack case 210, a third pack case 230 positioned next to the second pack case 220, and a fourth pack case 240 positioned next to the third pack case 230. That is, the first pack case 210, the second pack case 220, the third pack case 230, and the fourth pack case 240 may be sequentially positioned in one direction (the X-axis direction). However, the number of pack cases 210 constituting the pack case assembly 200 is not limited to the above embodiment, and may be designed in various ways depending on the size of the battery accommodation space within the vehicle.

The first pack case 210, the second pack case 220, the third pack case 230, and the fourth pack case 240 may have substantially the same structure and shape. For convenience of explanation, the features common to the first pack case 210, the second pack case 220, the third pack case 230, and the fourth pack case 240 will be described with reference to the pack case 210.

In this case, according to an embodiment, the pack case assembly 200 may be directly mounted to the chassis of a vehicle, or the pack case assembly 200 itself may be the chassis of the vehicle. That is, the cell array 100 may be configured to be directly inserted and/or mounted to the vehicle chassis (e.g., the pack case assembly 200).

In this case, the cell array 100 may be configured to be inserted into the pack case 210 in the first direction (Y-axis direction), and the plurality of pack cases 210 may be configured to be connected in the second direction (X-axis direction) perpendicular to the first direction.

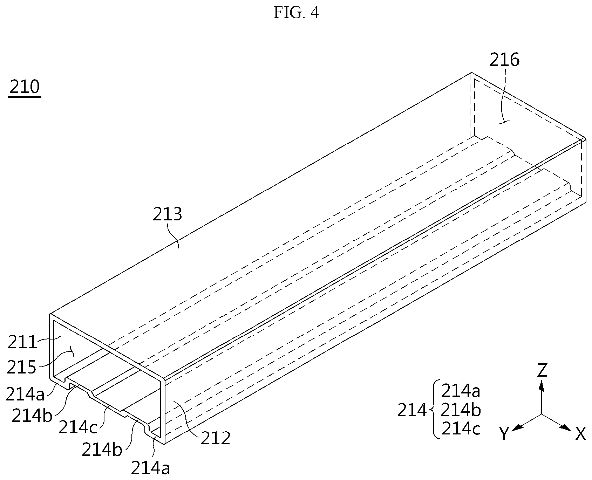

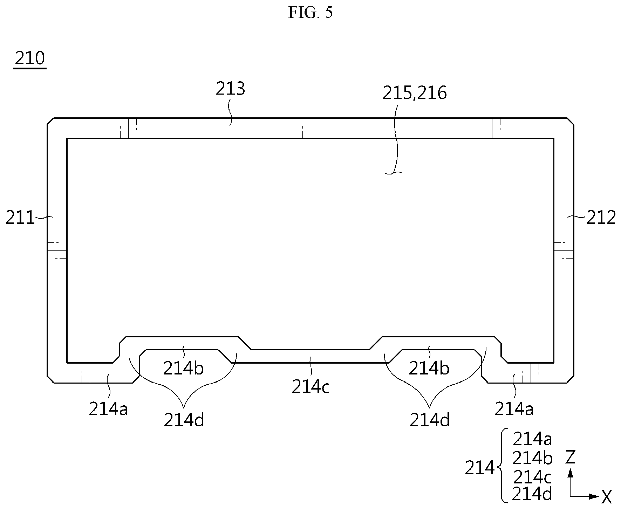

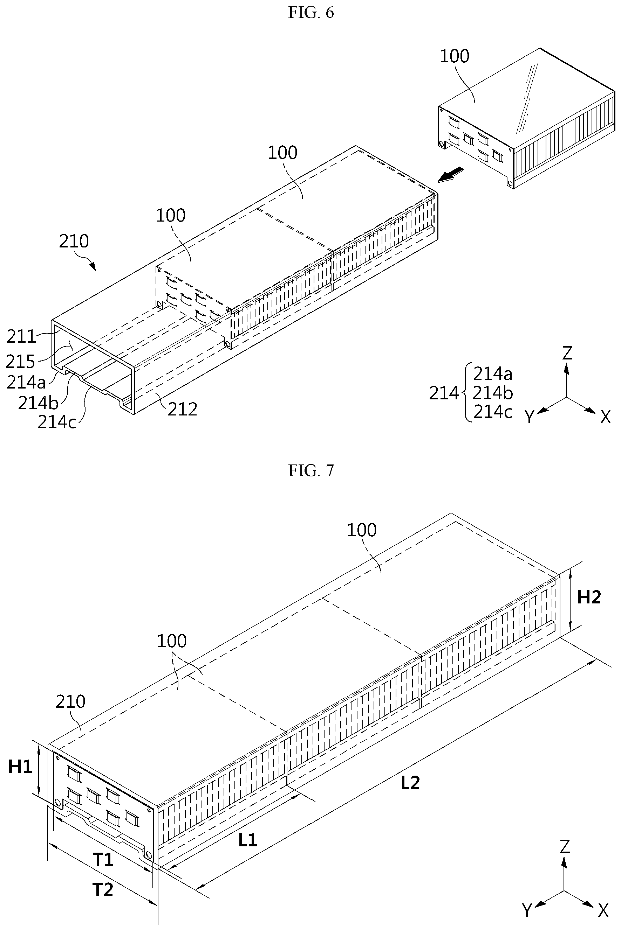

FIG. 4 is a perspective view of a pack case 210 according to an embodiment of the present disclosure. FIG. 5 is a front view of a pack case 210 according to an embodiment of the present disclosure. FIG. 6 is a drawing illustrating a cell array 100 being inserted into a pack case 210 according to an embodiment of the present disclosure. FIG. 7 is a view illustrating a cell array 100 inserted into a pack case 210 according to an embodiment of the present disclosure.

First, referring to FIG. 4, the pack case 210 may have front and rear openings 215 and 216. This embodiment shows the pack case 210 that has openings 215 and 216 formed on the front and rear sides, respectively. The pack case 210 may have the shape of a rectangular tube that has an opening formed in the front-back direction (e.g., the Y-axis direction in FIG. 4). For example, the pack case 210 may include a left plate 211 and a right plate 212 that face the left direction (e.g., the -X-axis direction in FIG. 4) and the right direction (e.g., the +X-axis direction in FIG. 4), respectively, a lower plate 214 that faces the downward direction (e.g., the -Z-axis direction in FIG. 4), and an upper plate 213 that faces the upward direction (e.g., the +Z-axis direction in FIG. 4). In addition, the left plate 211, the right plate 212, the lower plate 214, and the upper plate 213 may be configured in an integrated form. In this case, the pack case 210 may have front and rear openings. That is, the pack case 210 may include both a front opening 215 and a rear opening 216.

According to the above-implemented configuration of the present disclosure, the cell array 100 may be stored in or removed from the inner space of the pack case 210 through the front opening 215 and/or the rear opening 216. Therefore, it is easy to assemble the cell array 100 into the pack case 210, and a defective cell array 100 may be easily replaced with another cell array 100. Therefore, after-sales service (A/S) is possible even in the CTC form.

In another embodiment, although not shown in the drawing, the pack case 210 may have only one opening in either the front direction (e.g., the +Y-axis direction in FIG. 4) or the rear direction (e.g., the -Y-axis direction in FIG. 4). For example, the pack case 210 may further include a rear plate (not shown) covering one side facing the rearward direction. In this case, the front side of the pack case 210 may be open. That is, the pack case 210 may include a front opening 215, and the cell array 100 may be stored in or removed from the inner space of the pack case 210 through the front opening 215.

In another embodiment, although not shown in the drawing, the pack case 210 may be configured as a U-frame. When the pack case 210 is configured as a U-frame, it may be configured to cover both lateral surfaces and the lower surface of the cell array 100. For example, the pack case 210 may include a left plate 211 and right plate 212 that face the left direction and right direction of the cell array 100, respectively, and a lower plate 214 that faces the downward direction of the cell array 100. The left plate 211, the right plate 212, and the lower plate 214 may be configured as an integrated unit. In this case, the pack case 210 may be open in the upward direction and front-back direction (e.g., the Y-axis direction in FIG. 4).

In this case, the pack case 210 may further include a top plate (not shown). The top plate may be configured to form a side of the pack case 210 facing the upward direction. When the pack case 210 is configured as a U-frame, the top plate may be coupled to the open upper side of the pack case 210. The top plate may be welded to the U-frame of the pack case 210. However, the top plate may be omitted as needed. For example, the pack case 210 may have an open upper side. However, the shape and/or structure of the pack case 210 is not limited to the above embodiment and may be designed in various ways.

Referring to FIGS. 4 to 6, the lower plate 214 of the pack case 210 may have a step formed thereon. That is, the lower plate 214 of the pack case 210 may be divided into areas along the X-axis, and the height of the plate may be formed differently depending on the area. The lower plate 214 of the pack case 210 may be divided into an edge 214a protruding downward, a central portion 214c located higher than the edge 214a, and a middle portion 214b located between the edge 214a and the central portion 214c and positioned higher than the central portion 214c.

The edge 214a, the central portion 214c, and the middle portion 214b may have the shape of a horizontally flat plate. Connecting portions 214d, configured to be inclined at a predetermined angle with respect to the horizontal plane, may be provided between the edge 214a and the middle portion 214b and between the middle portion 214b and the central portion 214c so as to connect them.

The edge 214a of the lower plate 214 is the lowest portion of the lower plate 214 and thus may directly contact the floor of the vehicle. In addition, the edge 214a protrudes downward and may guide the sliding movement of the cell array 100. The middle portion 214b of the lower plate 214 is the highest portion of the lower plate 214 and may be configured such that the cell array 100 is seated thereon. The central portion 214c of the lower plate 214 may be configured to be coupled to a venting valve 600, which will be described later.

The lower plate 214 may have a symmetrical shape with respect to the X-axis. The central portion 214c of the lower plate 214 may be positioned at the center with respect to the X-axis. The middle portions 214b of the lower plate 214 may be configured with a plate extending leftward and a plate extending rightward from the central portion 214c. The edges 214a of the lower plate 214 may be configured with a plate extending leftward and a plate extending rightward from the middle portions 214b.

According to the above-implemented configuration of the present disclosure, a step may be formed on the lower plate 214 of the pack case 210, facilitating the storage and positional fixation of the cell array 100. In addition, when the venting valve 600, which will be described later, is mounted to the lower plate 214 (e.g., the central portion 214c) of the pack case 210, the venting valve 600 may be prevented from directly contacting one surface (the floor of the vehicle) outside the pack case 210, thereby protecting the venting valve 600 from the outside.

The pack case 210 may be formed of metal having rigidity and heat resistance to physically or chemically protect the cell array 100 accommodated within the pack case 210. For example, the pack case 210 may include at least one of an aluminum alloy, stainless steel, a titanium alloy, and an amorphous metal. For example, the pack case 210 may include an aluminum alloy.

According to the above-implemented configuration of the present disclosure, since each pack case 210 constituting the pack case assembly 200 forms an independent space and includes a thick and rigid material (e.g., aluminum), the pack case 210 itself acts as a partition wall, thereby preventing thermal propagation to the cell arrays within adjacent pack cases.

The pack case 210 may be formed using one or more of extrusion, forging, pressing, and casting. According to an embodiment, the pack case 210 may be formed by extrusion. For example, in the case where the pack case 210 is configured as a hollow structure including the front opening 215 and the rear opening 216, it may be formed into a square tube by extrusion. According to the above-implemented configuration of the present disclosure, the manufacturing process is simple and efficient in producing a pack case 210 with a consistent shape and a long length. Referring to FIG. 6, the cell array 100 may be inserted into the pack case 210 in the first direction (Y-axis direction). The cell array 100 may be inserted into the pack case 210 only in the first direction. Unlike typical pack cases, the cell array 100 is unable to be inserted in the second direction (X-axis direction) perpendicular to the first direction. That is, the pack case 210 may be configured so that the plurality of cell arrays 100 may be inserted into the pack case 210 in the first direction. For example, the plurality of cell arrays 100 may be inserted into the pack case 210 in the front-back direction through the front opening 215 and/or the rear opening 216 of the pack case 210. That is, the cell arrays 100 may be inserted in a row into the pack case 210.

The cell array 100 may be configured to slide into the pack case 210 through the front opening 215 and/or the rear opening 216. That is, the plurality of cell arrays 100 may be inserted into the pack case 210 in a sliding manner in the first direction. The cell arrays 100 may be inserted in a row into the pack case 210. The cell arrays 100 inserted in a sliding manner may be in close contact with each other. The cell arrays 100 inserted to the pack case 210 may be configured to directly contact each other without a predetermined gap.

Conventionally, battery modules are respectively assembled by vertically mounting them on the pack case, and clearance must be provided between the battery modules for assembly. According to the present disclosure, by inserting the cell arrays 100 in a row into the pack case 210, the cell arrays 100 may be assembled without a gap therebetween.

According to the above-implemented configuration of the present disclosure, since the cell array 100 is inserted into the pack case 210 through sliding movement, assembly and coupling may be convenient and simple. In addition, when there is a defective cell array 100 stored therein, it may be easily replaced with another cell array 100. Therefore, after-sales service (A/S) is possible even in the CTC form. In addition, the cell arrays 100 may closely contact each other, thereby maximizing energy density.

In this case, the number of cell arrays 100 inserted into the pack case 210 may be designed in various ways. For example, referring to FIGS. 6 and 7, three cell arrays 100 may be inserted into the pack case 210. That is, in the case where N cell arrays 100 are capable of being inserted in the Y-axis direction in consideration of the battery insertion space within the vehicle, the pack case 210 may be manufactured to have a length that allows N cell arrays 100 to be inserted. Since the length of the pack case 210 is adjustable, it may be manufactured with a flexible size depending on the vehicle, thereby manufacturing a battery pack 10 of a flexible size.

Referring to FIG. 7, the lateral dimension (X-axis length) T2 of the pack case 210 may correspond to the lateral dimension (X-axis length) T1 of the cell array 100. The lateral dimension (X-axis length) T2 of the pack case 210 may be substantially the same as the lateral dimension (X-axis length) T1 of the cell array 100, or may be formed to be slightly greater than that to facilitate insertion and installation.

The height (Z-axis length) H2 of the pack case 210 may correspond to the height (Z-axis length) H1 of the cell array 100. The height (Z-axis length) H2 of the pack case 210 may be substantially the same as the height (Z-axis length) H1 of the cell array 100, or may be formed slightly greater than that to facilitate insertion and mounting.

The longitudinal dimension (Y-axis length) L2 of the pack case 210 may correspond to N times the longitudinal dimension (Y-axis length) L1 of the cell array 100 (N: the number of inserted cell arrays 100). The longitudinal dimension (Y-axis length) L2 of the pack case 210 may be substantially the same as N times the longitudinal dimension (Y-axis length) L1 of the cell array 100, or may be formed slightly greater than that to facilitate insertion and mounting. For example, referring to FIG. 7, when the pack case 210 is configured to receive three cell arrays 100 inserted thereinto, the longitudinal dimension (Y-axis length) L2 of the pack case 210 may be substantially equal to three times the longitudinal dimension (Y-axis length) L1 of the cell array 100.

According to the above-implemented configuration of the present disclosure, the size and length of the pack case 210 may be configured to correspond to the cell array 100, and the pack case 210 may be formed to extend in the first direction so that the cell array 100 may be inserted in the first direction. Therefore, the structure of the pack case 210 may be simplified and the pack case 210 may be modularized for ease of manufacture. The modularized pack case 210 may be applied to vehicles of various sizes.

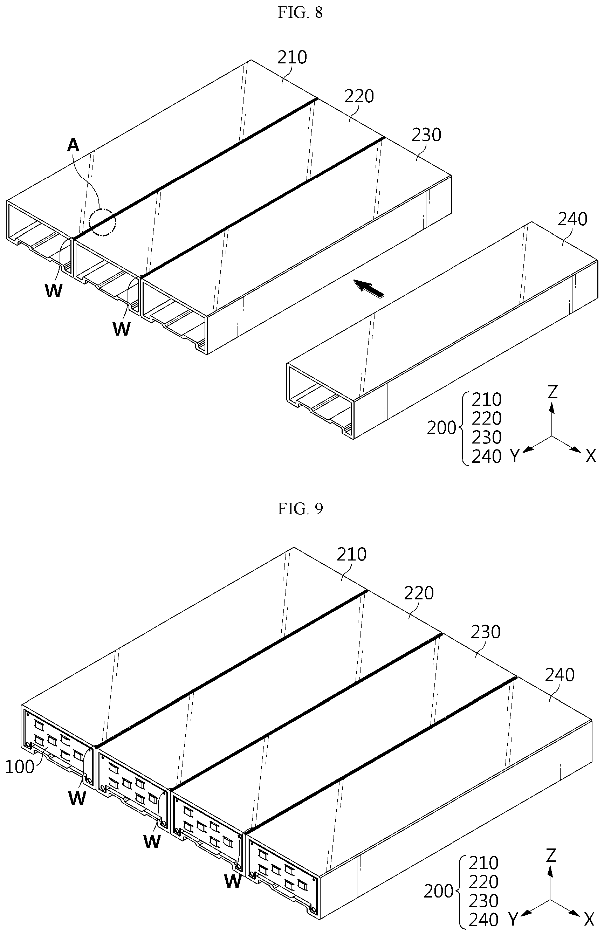

FIG. 8 is a drawing illustrating a plurality of pack cases 210 arranged according to an embodiment of the present disclosure. FIG. 9 is a perspective view illustrating a plurality of pack cases 210 and cell arrays 100 according to an embodiment of the present disclosure.

A plurality of pack cases 210 may be provided. The plurality of pack cases 210 may be configured to be connected in one direction. In this case, the plurality of pack cases 210 arranged above may be defined as a pack case assembly 200. The plurality of pack cases 210 may be configured to be connected in the second direction (X-axis direction) perpendicular to the first direction. The plurality of pack cases 210 may be stacked in the second direction.

In this case, the number of pack cases 210 constituting the pack case assembly 200 may be designed in various ways. That is, when M pack cases 210 (or cell arrays 100) are capable of being inserted in the X-axis direction in consideration of the battery insertion space within the vehicle, the M pack cases 210 may be configured to be arranged. For example, referring to FIGS. 8 and 9, four pack cases 210 may be arranged. For example, the pack case assembly 200 may include a first pack case 210, a second pack case 220, a third pack case 230, and a fourth pack case 240. The first pack case 210, the second pack case 220, the third pack case 230, and the fourth pack case 240 may be sequentially arranged in the X-axis direction. As described above, since the number of pack cases 210 is adjustable, the size may be made flexible for each vehicle, thereby manufacturing a battery pack 10 of a flexible size.

The plurality of pack cases 210 may be combined and integrated. The plurality of pack cases 210 constituting the pack case assembly 200 may be coupled to each other by welding. For example, laser welding, ultrasonic welding, or friction stir welding may be used, but various other joining methods may also be applied. The plurality of pack cases 210 disposed side by side may be configured to be welded to each other in a one-to-one manner. Referring to the part indicated by A in FIG. 8, the right plate 212 of the first pack case 210 and the left plate 211 of the second pack case 220, which face each other, may be welded to each other. The weld W may extend in the Y-axis direction along both plates of the pack case 210.

According to the above-implemented configuration of the present disclosure, the plurality of pack cases 210 may be sequentially connected such that the length and size of the pack case assembly 200 increase in the second direction. In addition, the welding method may be employed to facilitate and simplify joining and assembly. By coupling modular pack cases 210, the size may be flexibly adjusted to fit various vehicle sizes.

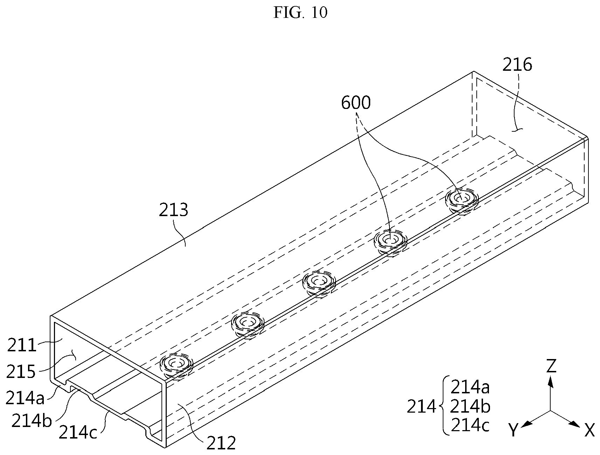

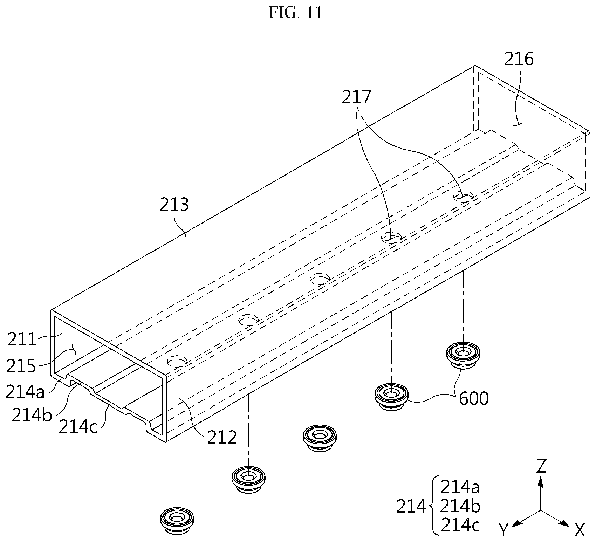

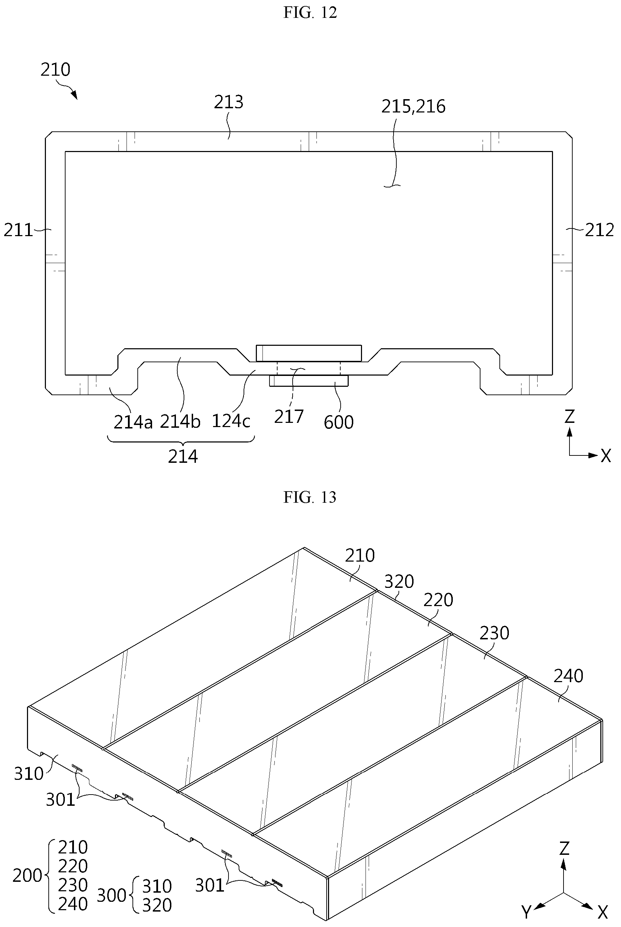

FIG. 10 is a perspective view illustrating a pack case 210 equipped with a venting valve 600 according to an embodiment of the present disclosure. FIG. 11 is an exploded perspective view of a pack case 210 equipped with a venting valve 600 according to an embodiment of the present disclosure. FIG. 12 is a front view of a pack case 210 equipped with a venting valve 600 according to an embodiment of the present disclosure.

Referring to FIGS. 10 to 12, the battery pack 10 may further include at least one venting valve 600 disposed in at least one venting hole 217 formed in one side of the pack case 210.

The venting valve 600 may be configured to penetrate the lower plate 214 of the pack case 210. The venting valve 600 may be disposed to penetrate the central portion 214c of the lower plate 214. A venting hole 217 may be formed in the central portion 214c of the lower plate 214 of the pack case 210. That is, the venting valve 600 may be coupled and fixed to the lower plate 214 by passing through the venting hole 217.

A plurality of venting valves 600 may be coupled to the pack case 210. For example, the plurality of venting valves 600 may be arranged in the Y-axis direction. The plurality of venting valves 600 may be arranged at predetermined intervals. Similarly, a plurality of venting holes 217 may be provided, and the plurality of venting holes 217 may be arranged in the Y-axis direction to correspond to the positions of the venting valves 600. For example, referring to FIG. 11, five venting valves 600 may be coupled to a single pack case 210, and five venting holes 217 may be formed therein.

Conventionally, venting was performed laterally from the pack case, which resulted in safety issues for other components when the venting gas is discharged toward internal components of the vehicle. According to the above-implemented configuration of the present disclosure, venting gas generated by a thermal event may be discharged downward from the battery pack 10 without being obstructed or blocked by structures such as a vehicle body or chassis located adjacent to the battery pack 10.

Therefore, the venting gas may be smoothly and quickly discharged to the outside of the vehicle before thermal energy accumulates within the battery pack 10 due to discharged particles. As the pressure and thermal energy within the battery pack 10 are efficiently discharged, thermal propagation to the adjacent cell array 100 may be delayed, thereby enhancing safety.

The venting valve 600 may be positioned adjacent to the battery cell 110 and/or electrode lead 111, thereby minimizing thermal propagation to adjacent battery cells 110. The edge 214a of the lower plate 214 is the lowest portion in the lower plate 214 and thus may directly contact the floor of the vehicle. In this case, the central portion 214c to which the venting valve 600 is coupled is higher than the edge 214a, thereby preventing the venting valve 600 from coming into direct contact with the floor of the vehicle. Therefore, the venting valve 600 may be prevented from being damaged due to direct contact with the floor of the vehicle or the like.

The middle portion 214b of the lower plate 214 is the highest portion in the lower plates 214, so that the cell array 100 may be seated thereon. The central portion 214c is lower than the middle portion 214b, thereby preventing the cell array 100 from being lifted by the venting valve 600.

According to the present disclosure, when thermal runaway occurs in a battery cell 110, gases or flames generated within the battery cell 110 may be discharged to the outside of the cell array 100 through the bottom portion of the battery cell 110. Specifically, directional venting may be induced toward the lower portion of the cell array 100. Gases or flames generated within the battery cell 110 may be directly discharged through the venting valve 600 located below and adjacent to the battery cell 110, instead of being discharged through the upper portion of the battery cell 110, thereby enhancing safety. Cooling of the battery cell 110 may be performed at the upper portion opposite the venting valve 600, avoiding interference with downward venting.

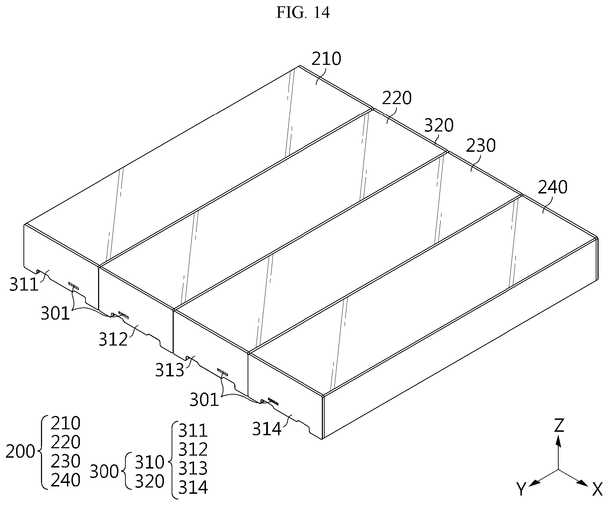

FIG. 13 is a perspective view illustrating a battery pack 10 including a cap 300 according to an embodiment of the present disclosure. FIG. 14 is a perspective view illustrating a battery pack 10 including a cap 300 according to another embodiment of the present disclosure.

The battery pack 10 may further include a cap 300 configured to cover the openings 215 and 216 of the pack case 210. That is, the cap 300 may cover the front and/or rear opening of the pack case 210. According to an embodiment, the pack case 210 may be formed with a front opening 215 and a rear opening 216, and the cap 300 may include a front cap 310 configured to cover the front opening 215 and a rear cap 320 configured to cover the rear opening 216.

The shape of the cap 300 may be substantially the same as the front shape of the pack case assembly 200. That is, the cap 300 may be configured to cover all of the plurality of openings 215 or 216 of the plurality of pack cases 210 constituting the pack case assembly 200. The lateral dimension (X-axis length) of the cap 300 may be substantially the same as the lateral dimension (X-axis length) of the pack case assembly 200. For example, referring to FIG. 13, when there are four pack cases 210 constituting the pack case assembly 200, the lateral dimension (X-axis length) of the cap 300 may be substantially the same as four times the lateral dimension (X-axis length) of the pack case 210. The height (Z-axis length) of the cap 300 may be substantially the same as the height (Z-axis length) of the pack case assembly 200 (pack case 210). The lower surface of the cap 300 may have a vertically protruding or concave shape to conform to the lower plate 214 of the pack case 210.

The cap 300 may include a plurality of holes 301. The number of holes 301 formed in the cap 300 may correspond to the number of pack cases 210 constituting the pack case assembly 200. For example, referring to FIG. 13, when there are four pack cases 210 constituting the pack case assembly 200, four holes 301 may be formed to be spaced apart from each other in the X-axis direction. In addition, each hole 301 may be formed at a position corresponding to the opening 215 or 216 of each pack case 210. Specifically, the hole 301 may be formed at a position corresponding to a busbar connector 520 connected to each pack case 210. The busbar connector 520 connected to each pack case 210 may pass through the hole 301 and then be connected to the external element of the pack case 210.

The cap 300 may be configured to be attached to and detached from the pack case 210. According to an embodiment, the cap 300 may include an adhesive at the edge that is in contact with the pack case 210. In this case, the adhesive strength is suitably between 0.1 gf/25 mm and 500 gf/25 mm, and more preferably between 1 gf/25 mm and 100 gf/25 mm. This is lower than the adhesive strength of typical adhesives 1,500 gf/25 mm, distinguishing it from typical adhesives and facilitating attachment and detachment. However, the configuration of the cap 300 is not limited to the above-described embodiment, and the cap 300 may be designed in various ways to be attached to and detached from the pack case 210.

According to the above-implemented configuration of the present disclosure, the cap 300 may cover the front and rear sides of the pack case 210, thereby reinforcing the structural rigidity of the cell array 100 and preventing venting gas from spreading to another pack case 210 through the front or rear sides of the pack case 210. The cap 300 is detachable from the pack case 210, thereby allowing for easy separation from the pack case 210 and easy replacement of the cell array 100 within the pack case 210.

According to another embodiment, referring to FIG. 14, the front cap 310 and the rear cap 320 may include a plurality of caps 300 configured to cover the plurality of pack cases 210, respectively. That is, the caps 300 may individually cover the opening 215 or 216 of the pack case 210. For example, referring to FIG. 14, the front cap 310 may include a first front cap 311 covering the first pack case 210, a second front cap 312 covering the second pack case 220, a third front cap 313 covering the third pack case 230, and a fourth front cap 314 covering the fourth pack case 240. The rear cap 320 may also be configured with four caps in the same manner.

In this case, the shape of the cap 300 may be substantially the same as the front shape of the pack case 210. The lateral dimension (X-axis length) of the cap 300 may be substantially the same as the lateral dimension (X-axis length) of the pack case 210. The height (Z-axis length) of the cap 300 may be substantially the same as the height (Z-axis length) of the pack case assembly 200 (pack case 210). The lower surface of the cap 300 may be configured as a protruding structure and a concave structure, similar to the lower plate 214 of the pack case 210.

The cap 300 may include at least one hole 301. The hole 301 may be formed at a position corresponding to the opening of the pack case 210. Specifically, the hole 301 may be formed at a position corresponding to a busbar connector 520 connected to the pack case 210. The busbar connector 520 connected to the pack case 210 may pass through the hole 301 and then be connected to the external element of the pack case 210.

According to the above-implemented configuration of the present disclosure, individual caps 300 may be provided to cover respective pack cases 210, thereby allowing for individual attachment and detachment. This allows only the cap 300 of the pack case 210 including the cell array 100 requiring replacement to be attached or detached. In addition, since the standardized caps 300 may be collectively manufactured without adjusting the length or the number of holes 301 according to the size of the vehicle, mass production and cost reduction may be effectively achieved, and the advantages of parts commonality can be obtained.

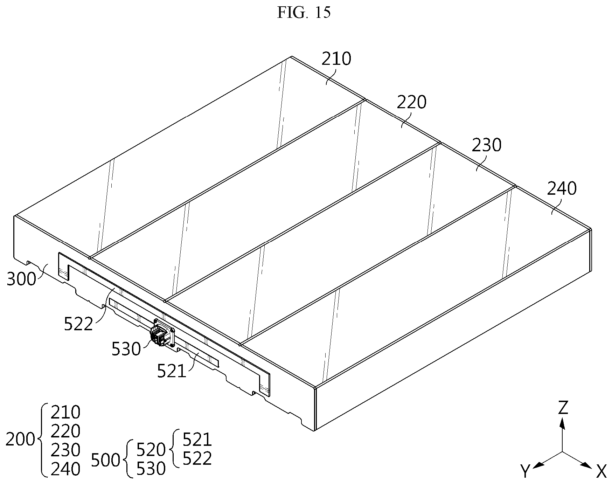

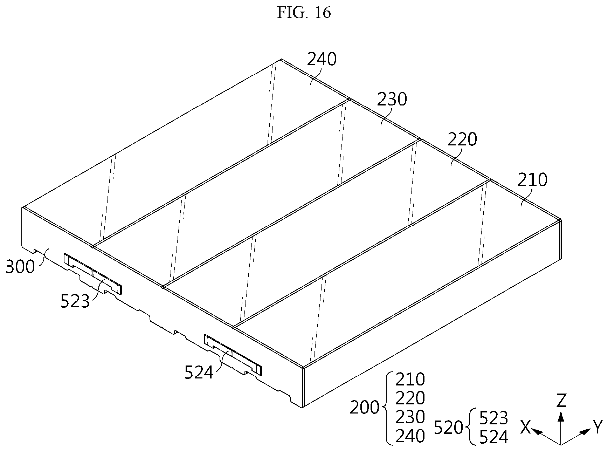

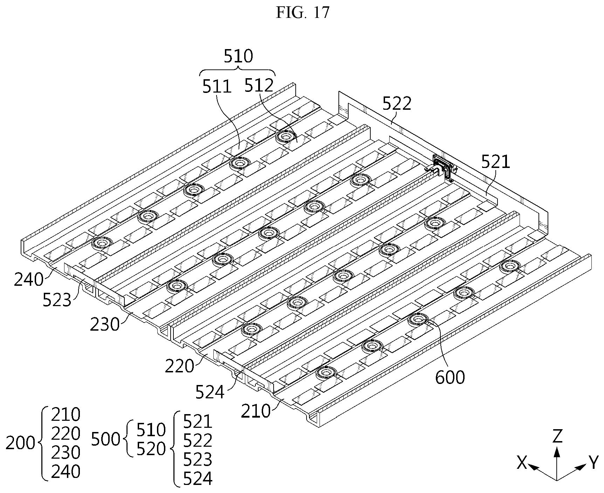

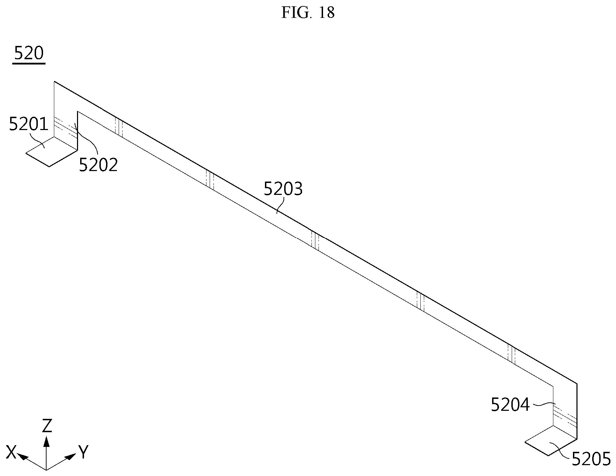

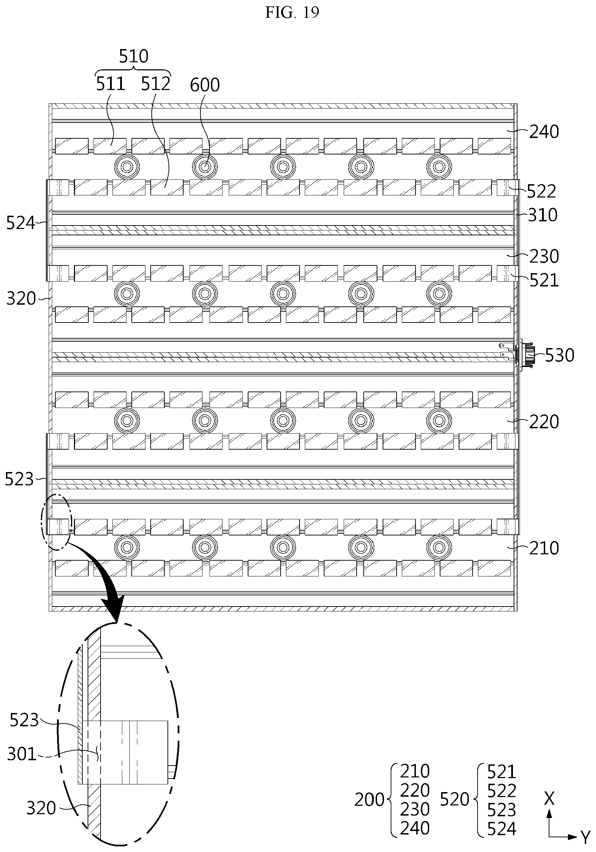

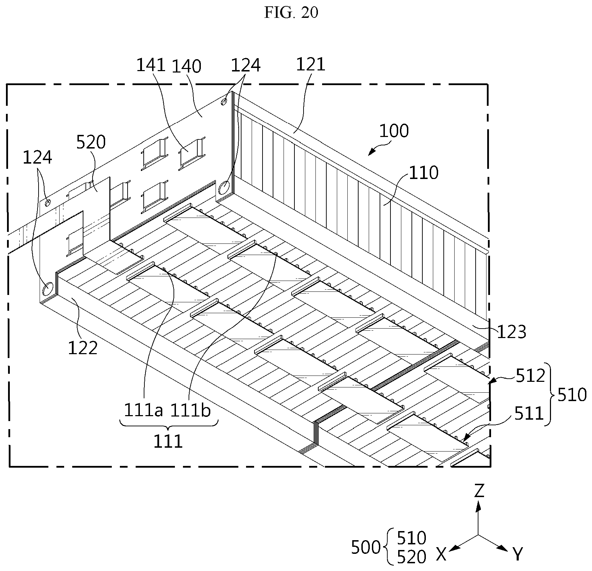

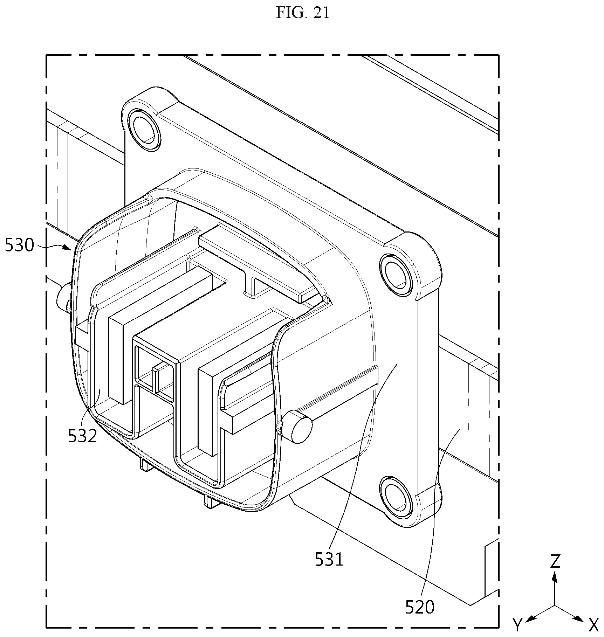

FIG. 15 is a front perspective view of a battery pack 10 including a busbar assembly 500 according to an embodiment of the present disclosure. FIG. 16 is a rear perspective view of a battery pack 10 including a busbar assembly 500 according to another embodiment of the present disclosure. FIG. 17 is a perspective view illustrating a lower surface of a pack case and a busbar assembly 500 according to an embodiment of the present disclosure. FIG. 18 is a drawing illustrating a busbar connector 520 according to an embodiment of the present disclosure. FIG. 19 is a top view of a busbar assembly 500 disposed on a lower surface of a pack case according to an embodiment of the present disclosure. FIG. 20 is a drawing illustrating a cell array 100 and a busbar assembly 500 connected according to an embodiment of the present disclosure. FIG. 21 is a drawing illustrating a portion of a battery pack 10 including a front connector 530 according to an embodiment of the present disclosure.

For convenience of explanation, the remaining portions of the pack case 210, excluding the lower plate 214, have been omitted from FIGS. 17 and 19.

A busbar assembly 500 may be configured to be electrically connected to the electrode leads 111 of the battery cells 110. The busbar assembly 500 may be configured to connect the electrode leads 111 of the plurality of battery cells 110 to each other. More specifically, the busbar assembly 500 may be configured to support the electrode leads 111, facilitate interconnection of the electrode leads 111, and enable sensing of voltage or the like from the electrode leads 111. The busbar assembly 500 may be configured to enable high voltage connection.

The busbar assembly 500 may include a busbar terminal 510, a busbar connector 520, and a front connector 530. The busbar terminal 510 may electrically connect two or more electrode leads 111. The busbar terminal 510 may electrically connect two or more electrode leads 111 within a single pack case 210.

Referring to FIG. 20, each battery cell 110 may include electrode leads 111. The electrode leads 111 of the battery cell 110 may include a positive electrode lead 111a and a negative electrode lead 111b, and the positive electrode lead 111a and the negative electrode lead 111b may be disposed on the lower surface of the battery cell 110 so as to be spaced apart from each other. The electrode leads 111 may be provided to protrude downward from the lower surface of the battery cell 110. The specific structure and configuration of the battery cell will be described later.

The busbar terminal 510 may be positioned at the lower portion of the battery cell 110 where the electrode leads 111 of the battery cell 110 are located, and may be configured to be connected to the electrode leads 111. The busbar terminal 510 may be positioned between the lower portion of the battery cell 110 and the lower plate 214 of the pack case 210. The busbar terminal 510 may be in vertical contact with a plurality of electrode leads 111 and may be coupled and fixed to the plurality of electrode leads 111. In this case, the coupling and fixing between the electrode leads 111 and the busbar terminal 510 may be performed using laser welding or ultrasonic welding.

In another embodiment, although not shown in the drawing, a slit hole (not shown) may be formed in the busbar terminal 510, and the electrode lead 111 may be inserted through the slit hole and welded thereto. However, the coupling and fixing method between the electrode leads 111 and the busbar terminal 510 is not limited to the above embodiment, and various other coupling methods may be applied.

The busbar terminal 510 may be coupled to a plurality of electrode leads 111 arranged along the first direction (Y-axis direction), which is the stacking direction of the battery cells 110. For example, referring to FIG. 20, the busbar terminal 510 may connect six electrode leads 111. However, the number of electrode leads 111 capable of being connected by the busbar terminal 510 is not limited to the above embodiment and may be designed in various ways.

A plurality of busbar terminals 510 may be aligned along the first direction (Y-axis direction), which is the stacking direction of the battery cells 110. The pack case 210 may include positive electrode busbar terminals 511 connecting a plurality of positive electrode leads 111a and negative electrode busbar terminals 512 connecting a plurality of negative electrode leads 111b. The positive electrode busbar terminals 511 and the negative electrode busbar terminals 512 may be aligned along the first direction (Y-axis direction), respectively.

In this case, the positive electrode busbar terminal 511 and the negative electrode busbar terminal 512 may connect the electrode leads 111 of different battery cells 110. That is, the positive electrode busbar terminal 511 may connect the electrode leads 111 of the first to sixth battery cells 110, and the negative electrode busbar terminal 512 may connect the electrode leads 111 of the fourth to ninth battery cells 110. According to the above-described embodiment of the present disclosure, all battery cells 110 accommodated within the pack case 210 may be electrically connected.

The busbar terminal 510 may include metal such as copper. The busbar terminal 510 may have the shape of a thin and flat plate. For example, the busbar terminal 510 may be rectangular.

The busbar connector 520 may electrically connect busbar terminals 510 disposed in different pack cases (e.g., 210 and 220). That is, one end and the other end of the busbar connector 520 may be disposed in different pack cases (e.g., 210 and 220).

A plurality of busbar connectors 520 may be provided. For example, referring to FIG. 17, the busbar connector 520 may include a first connector 521 for connecting the busbar terminal 510 of the second pack case 220 and the busbar terminal 510 of the third pack case 230, a second connector 522 for connecting the busbar terminal 510 of the first pack case 210 and the busbar terminal 510 of the fourth pack case 240, a third connector 523 for connecting the busbar terminal 510 of the third pack case 230 and the busbar terminal 510 of the fourth pack case 240, and a fourth connector 524 for connecting the busbar terminal 510 of the first pack case 210 and the busbar terminal 510 of the second pack case 220. According to the above-implemented configuration of the present disclosure, all busbar terminals 510 constituting the pack case assembly 200 may be electrically connected.

Referring to FIG. 18, the busbar connector 520 may include a plurality of bent portions. For example, the busbar connector 520 may be positioned below the battery cell 110, and may include a first portion 5201 extending in the first direction (Y-axis direction), a second portion 5202 extending in the vertical direction (+Z-axis direction) from the first portion 5201, a third portion 5203 extending in the second direction (X-axis direction) from the second portion 5202, a fourth portion 5204 also extending in the vertical direction (-Z-axis direction) from the third portion 5203, and a fifth portion 5205 extending in the first direction (Y-axis direction) from the fourth portion 5204.

Referring to the enlarged view in FIG. 19, the busbar connector 520 may be configured to pass through a hole 301 formed in the cap 300 and then be connected outside the cap. That is, the intermediate portion of the busbar connector 520 may be positioned outward relative to the cap 300, and the peripheral portion may be positioned inward relative to the cap 300. For example, the first portion 5201 and the fifth portion 5205 of the busbar connector 520 may be positioned approximately inward relative to the cap 300, and the first portion 5201 and the fifth portion 5205 may pass through the hole 301 formed in the cap 300. In addition, the second portion 5202, the third portion 5203, and the fourth portion 5204 of the busbar connector 520 may be positioned outward relative to the cap 300. The second portion 5202, the third portion 5203, and the fourth portion 5204 may be disposed parallel to the cap 300. According to an embodiment, the second portion 5202, the third portion 5203, and the fourth portion 5204 may be in contact with the cap 300.

According to the above-implemented configuration of the present disclosure, the busbar connector 520 is configured to be externally connected, thereby preventing thermal propagation to the adjacent pack case 210 due to a thermal event by the busbar connector 520, and thus enhancing safety.

The front connector 530 may be configured to be connected to one or more electrode leads 111 and transmit sensing information to a control unit, such as a battery management system (BMS). The front connector 530 may be positioned on the busbar connector 520. The front connector 530 may be electrically connected to the busbar connector 520. For example, the front connector 530 may be positioned on the first connector 521 and electrically connected to the first connector 521.

The front connector 530 may be positioned to pass through the cap 300. The front connector 530 may include a plate portion 531 positioned on the cap 300, a connector portion 532 protruding forward from the plate portion 531 and configured to be connected with external components (e.g., a control unit such as a BMS), and a fixing portion (not shown) configured to be coupled and fixed to the pack case 210. In this case, the plate portion 531 may be configured to be coupled and fixed to the cap 300 and may be positioned on the outer side of the cap 300. The connector portion 532 may be positioned outside the cap 300. The fixing portion may penetrate the cap 300 and be secured to one surface within the pack case 210. The plate portion 531 may be coupled and fixed using bolts and screws. However, the coupling and fixing method is not limited to the above-described embodiment and may be designed in various ways.

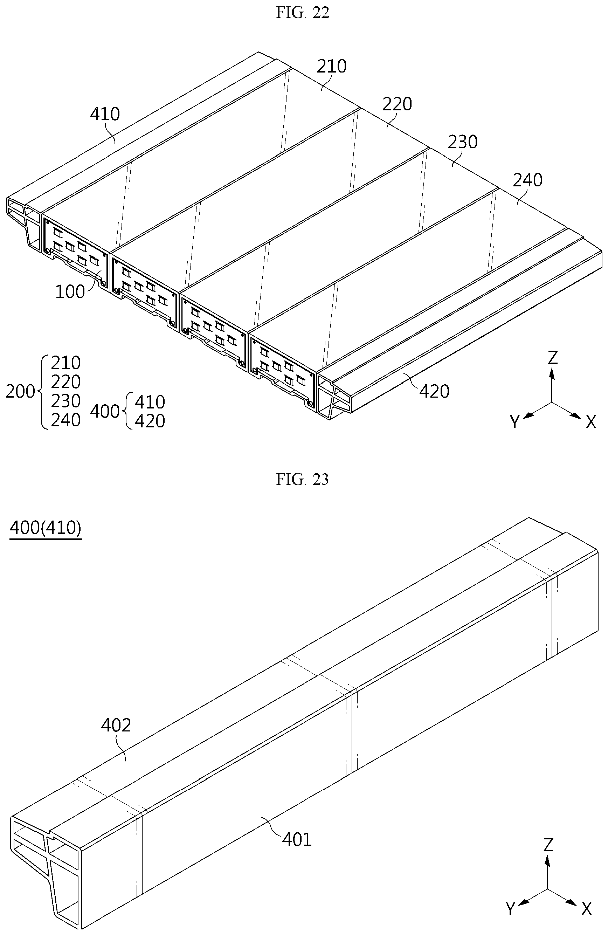

FIG. 22 is a perspective view illustrating a battery pack 10 including a side member 400 according to an embodiment of the present disclosure. FIG. 23 is a perspective view illustrating a side member 400 according to an embodiment of the present disclosure.

The battery pack 10 may further include a side member 400. The side member 400 may be configured to be directly coupled to the pack case assembly 200.

The side member 400 may be directly coupled to both sides of the pack case assembly 200. The side member 400 may include a first side member 410 positioned on the left side of the pack case assembly 200 and a second side member 420 positioned on the right side of the pack case assembly 200.

Referring to FIG. 23, the side member 400 may include a first lateral surface 401 configured to contact one side of the pack case 210, and a second lateral surface 402 configured to be coupled to the frame of the vehicle. According to an embodiment, the side member 400 may be directly connected to the chassis of the vehicle. According to another embodiment, the side member 400 may be the chassis of the vehicle. That is, the side member 400 itself may be the chassis of the vehicle.

Generally, a battery module is accommodated in a battery pack 10 and the battery pack 10 is assembled to the vehicle chassis. However, this increases the number of unnecessary components and has disadvantages in terms of space utilization and energy efficiency. According to the above-implemented configuration of the present disclosure, the side member 400 may be directly coupled to the vehicle chassis or may be utilized as the vehicle chassis itself. This allows for increased energy density, improved space utilization, and reduced costs while maintaining the structure and size of the vehicle.

In addition, by adjusting the length and number of pack cases 210, the pack case assembly 200 may have a flexible size for each vehicle, while the side members 400 have an advantage of parts commonality..

The side member 400 may be coupled to the pack cases (e.g., 210 and 240) located at the edges of the pack case assembly 200. For example, referring to FIG. 22, the first side member 410 may be coupled to the first pack case 210, and the second side member 420 may be coupled to the fourth pack case 240.

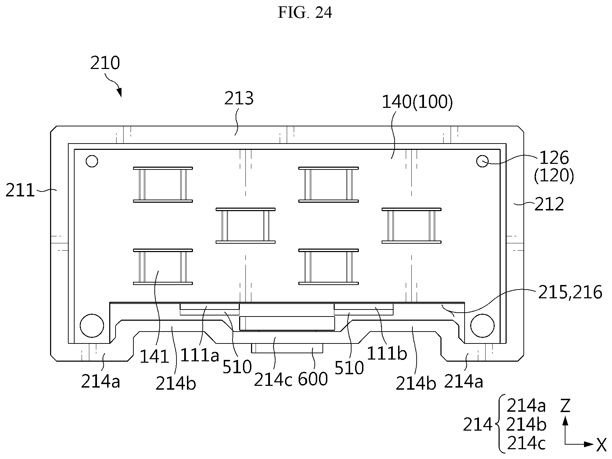

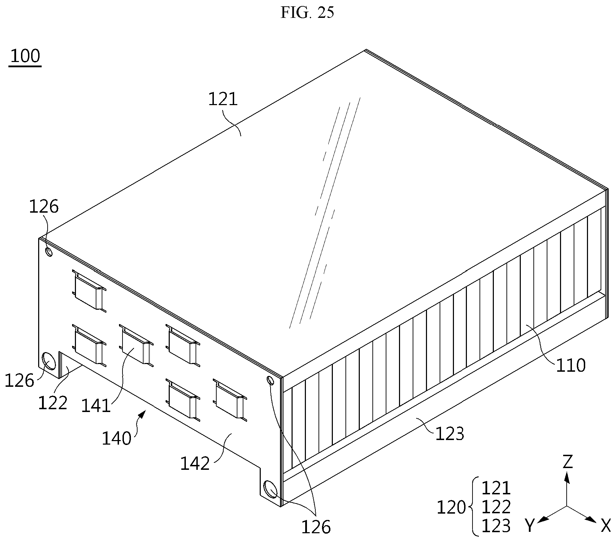

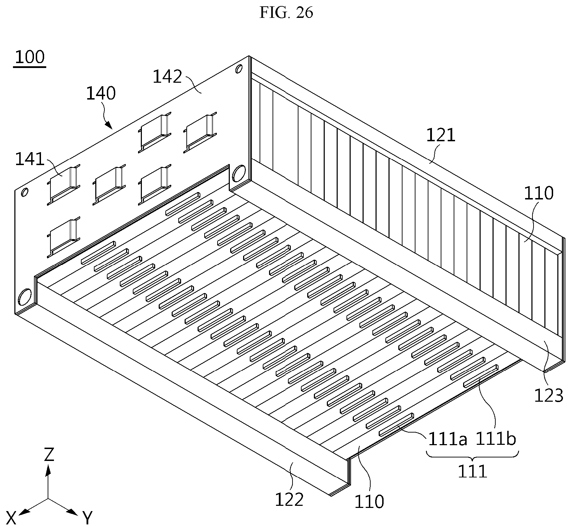

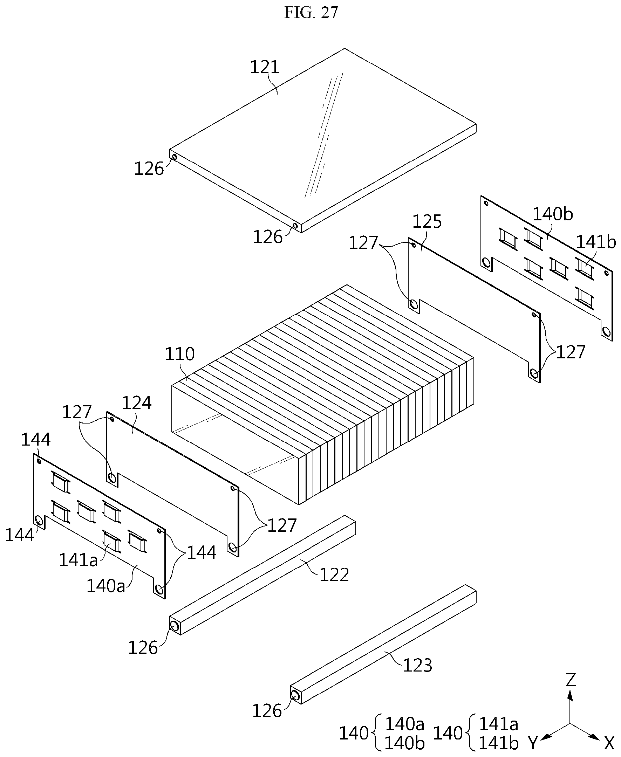

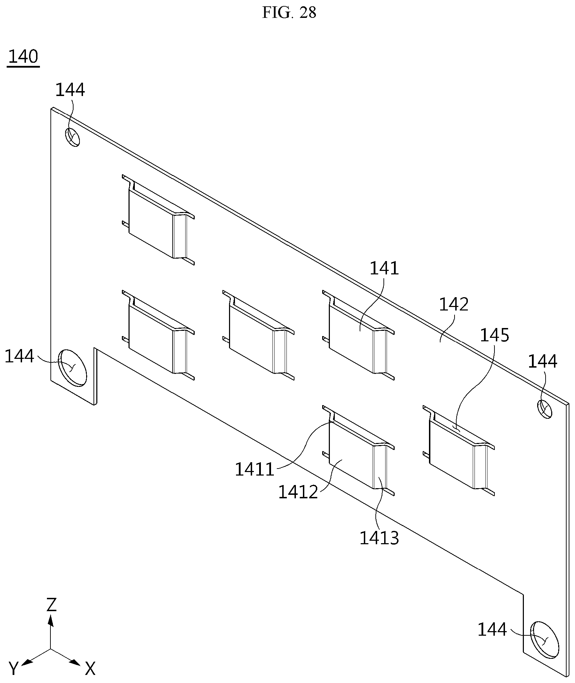

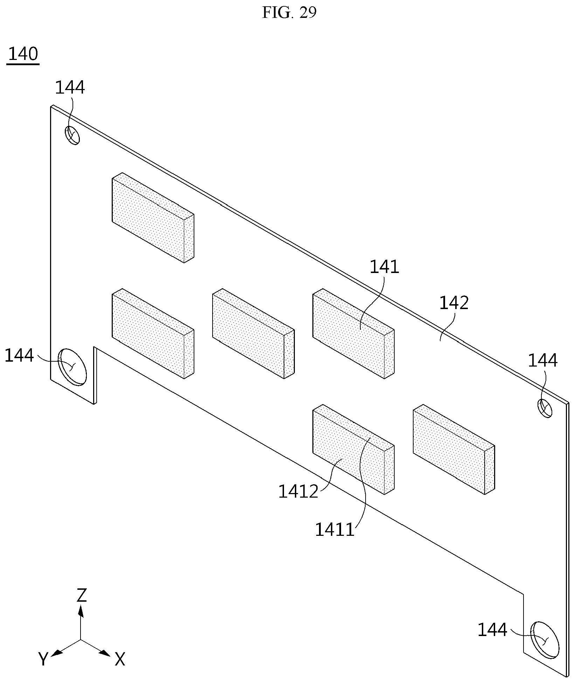

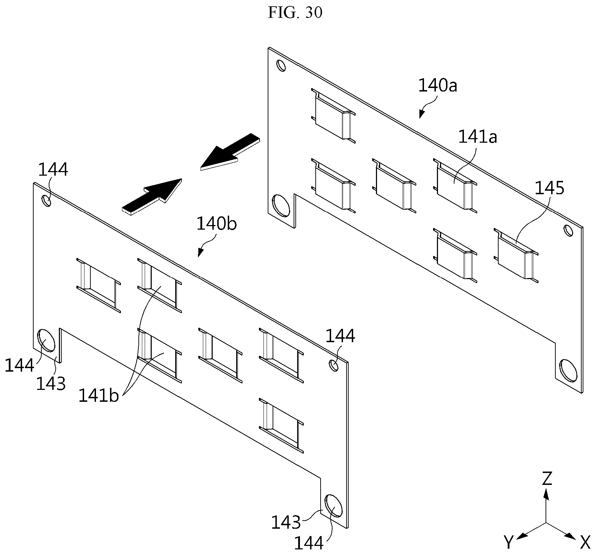

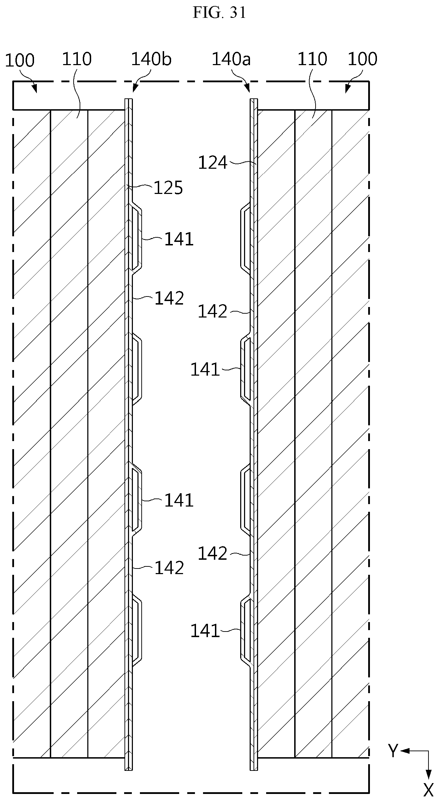

FIG. 24 is a front view illustrating a cell array 100 inserted into a pack case 210 according to an embodiment of the present disclosure. FIG. 25 is a perspective view illustrating a cell array 100 according to an embodiment of the present disclosure. FIG. 26 is a bottom perspective view of a cell array 100 according to an embodiment of the present disclosure. FIG. 27 is an exploded perspective view of a cell array 100 according to an embodiment of the present disclosure. FIG. 28 is a perspective view of an absorption member 140 according to an embodiment of the present disclosure. FIG. 29 is a perspective view of an absorption member 140 according to another embodiment of the present disclosure. FIG. 30 is a perspective view of individual absorption members 140 mounted to opposing cell arrays 100 according to an embodiment of the present disclosure. FIG. 31 is a side cross-sectional view illustrating cell arrays 100 and absorption members 140 facing each other and coupled according to an embodiment of the present disclosure.

Referring to FIGS. 24 to 31, the cell array 100 may include a battery cell 110, a module cover 120, and an absorption member 140.

The battery cell 110 may be configured as various types. For example, the battery cell 110 may include at least one of a pouch-type battery cell, a cylindrical battery cell, and a prismatic battery cell. However, for convenience of explanation, the following description focuses on the case where the battery cell 110 is a pouch-type battery cell.

A plurality of battery cells 110 may be provided. The plurality of battery cells 110 may be stacked on each other. The battery cells 110 may have various structures, and the plurality of battery cells 110 may be stacked in various ways. Pads may be included between the battery cells 110 to prevent movement of the battery cells. The pad may perform substantially the same function as the absorption member 140.

The battery cell 110 may have a structure in which a plurality of unit cells, configured as positive electrode plate-separator-negative electrode plate sequentially laminated, or a plurality of bi-cells, configured as positive electrode plate-separator-negative electrode plate-separator-positive electrode plate-separator-negative electrode plate sequentially laminated, are stacked depending on the battery capacity.

The battery cell 110 may be provided with an electrode lead 111. The electrode lead 111 is a kind of terminal exposed to the outside and connected to an external device, and may be made of a conductive material. The electrode lead 111 may include a positive electrode lead 111a and a negative electrode lead 111b.

The electrode lead 111 may be provided to protrude downward from the lower surface of the battery cell 110. The positive electrode lead 111a and the negative electrode lead 111b may be disposed on the lower surface of the battery cell 110 to be spaced apart from each other. The positive electrode lead 111a and the negative electrode lead 111b may each be electrically connected to a busbar terminal disposed on the lower surface of the battery cell 110. However, the position and shape of the electrode lead 111 are not limited to the above-described embodiment and may be designed in various ways.

High-temperature gases, flames, or sparks generated during thermal runaway in a battery cell 110 are highly likely to be ejected to the area where the electrode leads 111 are located (e.g., below the battery cells 110). According to the above-implemented configuration of the present disclosure, the electrode leads 111 are positioned at the bottom, thereby inducing directional venting so that gas or the like is vented downward when a thermal event occurs.

In this case, the electrode leads 111 and the venting valve 600 may be positioned adjacent to each other. Therefore, the venting gas or the like emitted downward may be quickly discharged to the outside of the battery pack 10 through the venting valve 600 positioned at the bottom. By minimizing the path of venting gas or the like within the pack case 210 to the venting valve 600, thermal propagation within the pack case 210 or between the pack cases 210 may be prevented.

The module cover 120 may be configured to protect and/or support the battery cells 110. A plurality of battery cells 110 may be stacked and stored in the module cover 120. The module cover 120 may surround at least a portion of the plurality of battery cells 110, thereby protecting the battery cells 110 from external vibrations or impacts.

The module cover 120 may further include a top cover 121 that covers the upper side of the battery cells 110, a front cover 124 that covers the front side, and a rear cover 125 that covers the rear side. The front cover 124 and the rear cover 125 may cover the front and rear sides of the battery cells 110 within the cell array 100, thereby supplementing structural rigidity and counteracting swelling of the battery cells 110.

The module cover 120 may include support members 122 and 123 that support the battery cells 110 from the bottom. However, the support members 122 and 123 may be configured not to cover at least a portion of the lower side of the battery cells 110 so that it is exposed to the outside. That is, the electrode leads 111 disposed on the lower surface of the battery cells 110 may not be covered by the module cover 120.

According to the embodiment of the present disclosure, since at least a portion of the lower side of the battery cells 110 is exposed, when thermal runaway occurs in the battery cells 110, gases or flames generated within the battery cells 110 may be discharged to the outside of the cell array 100 through the lower side of the battery cells 110. Specifically, directional venting may be induced toward the lower portion of the cell array 100.

The support members 122 and 123 may be configured as a first bar 122 and a second bar 123 that support the lower side of the battery cells 110 at both sides (left and right sides). The first bar 122 and the second bar 123 may be formed in the shape of a long bar extending in the first direction (Y-axis direction). The first bar 122 and the second bar 123 may be positioned on the left and right sides of the battery cell 110, respectively. That is, the battery cell 110 may be seated on the first bar 122 and the second bar 123.

According to another embodiment, although not shown in the drawing, the module cover 120 may include a bottom cover that covers the battery cell 110 from the bottom and has an opening formed in the center portion excluding the edge portion.

The front cover 124 and rear cover 125 may be configured to cover all of the top cover 121, the battery cells 110, and the support members 122 and 123. For example, referring to FIG. 27, the front cover 124 and rear cover 125 may be configured in the form of a rectangular plate including protrusions that protrude downwardly to correspond to the positions and shape of the support members 122 and 123. That is, the lower end of the front cover 124 and rear cover 125 may have protruding edges and concave center portions. In addition, referring to FIG. 24, the protruding edges of the front cover 124 and rear cover 125, i.e., the portions where the first bar 122 and second bar 123 are positioned, may be configured to be inserted into the edge 214a of the pack case 210 and to slide thereon. The center portions of the front cover 124 and rear cover 125 may be inserted into the middle portion 214b and the central portion 214c.

According to the above-described embodiment of the present disclosure, the cell array 100 may be guided to slide into the pack case 210. In addition, the cell array 100 may be prevented from moving within the pack case 210, thereby fixing the position of the cell array 100.

The structure and shape of the module cover 120 supporting the battery cells 110 are not limited to the above-described embodiment, and some components of the module cover 120 may be removed to reduce the weight and volume of the module cover 120.

As described above, the module cover 120 may be configured to minimize the weight and volume of the module cover 120 while protecting and/or supporting the battery cells 110. The module cover 120 may minimize weight and volume by exposing at least a portion of the battery cell 110. For example, referring to FIGS. 25 and 26, the module cover 120 may not cover at least a portion of both sides and/or lower side of the battery cell 110. That is, at least a portion of both sides and/or lower side of the battery cell 110 may be configured to be exposed. Therefore, the structural rigidity of the module cover 120 may be lower than that of the pack case 210.

According to the above-implemented configuration of the present disclosure, the battery cell 110 may be protected and supported by the rigid pack case 210 while minimizing the portion that is further covered by the module cover 120. According to this configuration, additional battery cells 110 may be accommodated in the space previously occupied by the module case and pack case of the cell array 100 within the battery pack 10, thereby increasing space efficiency and enhancing battery capacity. In addition, energy density may be maximized while reducing the weight of the battery pack 10, and costs may be reduced.

The module cover 120 may be manufactured, for example, by bending a metal plate, thereby enabling the module cover 120 to be manufactured as an integrated form. When the module cover 120 is manufactured as an integrated form, the joining process may be simplified. Alternatively, the module cover 120 may be provided in separate parts and then coupled to each other by welding or the like. However, the material of the module cover 120 is not limited to metal.

The top cover 121, the front cover 124, the rear cover 125, and the support members 122 and 123 constituting the module cover 120 may be coupled to each other. For example, the top cover 121, the first bar 122, and the second bar 123 may have protrusions 126 protruding toward the front and rear. In addition, the front cover 124 and rear cover 125 may have first fixing holes 127 provided at positions corresponding to the protrusions 126 and having a size and shape that conform to those of the protrusions 126. In this case, the front cover 124 and rear cover 125 may each have four first fixing holes 127 formed therein. Each protrusion 126 may be fitted into its corresponding first fixing hole 127. However, the sizes and shapes of the plurality of protrusions 126 and first fixing holes 127 may be different from each other. The method of fixing and joining the module cover 120 is not limited to the above embodiment, and various other coupling methods may be applied.

The absorption member 140 may be positioned on the front cover 124 and the rear cover 125.

The absorption member 140 may be directly coupled to the module cover 120. A second fixing hole 144 corresponding to the size and shape of the protrusion 126 formed on the top cover 121 and support members 122 and 123 of the module cover 120 may be provided at a portion corresponding thereto. In this case, the absorption member 140 may have four second fixing holes 144 formed therein. Each protrusion 126 may be fitted into a corresponding second fixing hole 144. However, the sizes and shapes of the plurality of second fixing holes 144 may be different from each other. The method of joining and fixing the module cover 120 and the absorption member 140 is not limited to the above embodiment, and various other coupling methods may be applied.

The absorption member 140 may include a front absorption member 140a positioned on the front side of the battery cells 110 and a rear absorption member 140b positioned on the rear side of the battery cells 110. The front absorption member 140a may be positioned on the front cover 124, and the rear absorption member 140b may be positioned on the rear cover 125.

Referring to FIG. 29, the absorption members 140 of the facing cell arrays 100 inserted into a single pack case 210 may face each other. The absorption members 140 of the facing cell arrays 100 inserted into a single pack case 210 may be configured to be in contact with each other. That is, the rear absorption member 140b of the cell array 100 positioned at the front and the front absorption member 140a of the cell array 100 positioned at the rear may be arranged to face each other. The rear absorption member 140b of the cell array 100 positioned at the front and the front absorption member 140a of the cell array 100 positioned at the rear may at least partially contact each other.

As described above, when the cell arrays 100 are inserted by sliding into the pack case 210, the cell arrays 100 inevitably come into direct contact with each other. During this process, collisions between the cell arrays 100 or movement of components within the cell array 100 or the battery cells 110 may occur. The absorption member 140 of the present disclosure may be configured to prevent movement of the battery cell 110 or components within the cell array 100 and absorb impacts due to collisions between the cell arrays 100. In addition, it may offset or absorb assembly tolerances between the cell arrays 100. The absorption member 140 may cover the front and rear sides of the battery cells 110 within the cell array 100, thereby supplementing structural rigidity and counteracting swelling of the battery cell 110.

The absorption member 140 may include a body 142 that is vertically upright and flat, and a shock absorber 141 extending from the body 142.

The shock absorber 141 may protrude outward from the body 142. The shock absorber 141 may be the first part to come into contact with an adjacent cell array 100. For example, the shock absorber 141 of the front absorption member 140a may protrude forward from the body 142. The shock absorber 141 of the rear absorption member 140b may protrude backward from the body 142.

According to the above-described embodiment of the present disclosure, when the shock absorber 141 first contacts the adjacent cell array 100 and absorbs the impacts resulting from the contact, the impact applied to the battery cells 110 and internal components may be reduced, thereby preventing movement of the battery cells 110 or the like.

A plurality of shock absorbers 141 may be provided. The plurality of shock absorbers 141 may be evenly arranged over the entire area of the body 142. The plurality of shock absorbers 141 may be arranged according to a certain rule. For example, referring to FIG. 24, the plurality of shock absorbers 141 may be arranged to be spaced apart from each other by a predetermined distance in the upward, downward, left, and right directions. Here, the predetermined distance may be defined as a distance corresponding to or greater than the size of the shock absorber 141. That is, the shock absorbers 141 disposed on the lower portion may be positioned between the shock absorbers 141 disposed on the upper portion, based on the X-axis. For convenience of explanation, the shock absorber 141 may be defined as a protruding area, and the body 142 between the shock absorbers 141 may be defined as a concave area. That is, the protruding areas and concave areas may be arranged alternately, based on the same height. In addition, the protruding areas and concave areas may be arranged alternately, based on the Z-axis.

In this case, the arrangement of the shock absorbers 141 of the front absorption member 140a may be different from that of the rear absorption member 140b. Specifically, the protruding and concave areas of the front absorption member 140a and the rear absorption member 140b may be disposed at positions opposite to each other. That is, the protruding area of the front absorption member 140a may face the concave area of the rear absorption member 140b, and the concave area of the front absorption member 140a may face the protruding area of the rear absorption member 140b. That is, the respective shock absorbers 141 of the front absorption member 140a and the rear absorption member 140b may not come into contact with each other.

According to the above-implemented configuration of the present disclosure, when the cell arrays 100 within the pack case 210 are in direct contact with each other, the shock absorbers 141 of the front absorption member 140a may contact the body 142 of the rear absorption member 140b, and the body 142 of the front absorption member 140a may contact the shock absorbers 141 of the rear absorption member 140b, so that the entire area of the absorption members 140 may absorb impacts. That is, the shock absorption area may be approximately twice the area of the shock absorbers 141, thereby more efficiently absorbing shocks.

The shock absorber 141 may include an absorption pad 1412 disposed parallel to the body 142, and connecting members 1411 and 1413 connecting the absorption pad 1412 and the body 142. The absorption pad 1412 may be a portion that directly contacts the facing cell array 100. The absorption pad 1412 may come into direct contact with the absorption member 140 of the facing cell array 100. The absorption pad 1412 may come into direct contact with the body 142 of the facing cell array 100.

The connecting members 1411 and 1413 may extend from the body 142 and be formed to be inclined at a predetermined angle with respect to the body 142 and the absorption pad 1412. The connecting members 1411 and 1413 may be formed on both sides (left and right sides) of the absorption pad 1412. According to another embodiment, the connecting members 1411 and 1413 may be formed on the upper and lower sides of the absorption pad 1412.

The body 142 may have an opening 145 at the position that overlaps the shock absorber 141. That is, the portion of the body 142 that overlaps the shock absorber 141 may be removed. As the shape of the opening 145 changes, deformation of the shock absorber 141 may become possible.

The absorption member 140 may include a material with rigidity and elasticity. For example, the absorption member 140 may include at least one of plastic, rubber, silicone, aerogel, metal, and glass fiber reinforced plastic (GFRP). For example, the absorption member 140 may include plastic.

According to the above-implemented configuration of the present disclosure, the instantaneous deformation of the absorption pad 1412 in the inward direction may be allowed when impacts occur due to contact between the cell arrays 100.

According to another embodiment, the shock absorber 141 may be thicker than the body 142. Referring to FIG. 29, the shock absorber 141 may be a separate component bonded and fixed to the body 142. That is, the body 142 may include a material with high rigidity, and the shock absorber 141 may include a material with lower rigidity and higher elasticity than the body 142.

However, the shape and structure of the shock absorber 141 are not limited to the above-described embodiment and may be variously designed and modified.

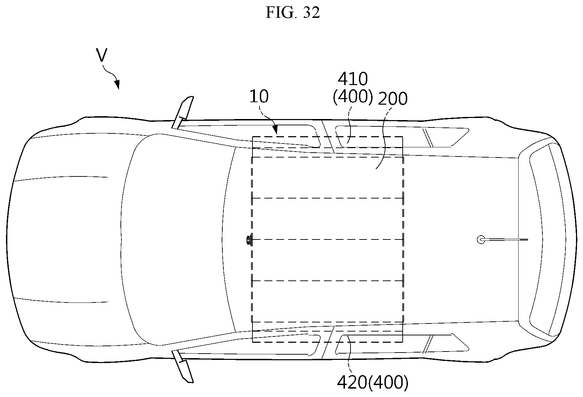

FIG. 32 is a schematic drawing of a vehicle V including a battery pack 10 according to an embodiment of the present disclosure.

Referring to FIG. 32, a vehicle V according to an embodiment of the present disclosure may include a battery pack 10 according to an embodiment of the present disclosure or a cell array 100 and a pack case assembly 200 according to an embodiment of the present disclosure. The vehicle V according to the present disclosure may be, for example, an electric vehicle, a hybrid vehicle, or a plug-in hybrid vehicle. The vehicle V includes a four-wheel vehicle and a two-wheel vehicle. The vehicle V may operate by receiving power from the battery pack 10 or cell array 100 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a cell array comprising a plurality of battery cells; and
a pack case assembly comprising a plurality of pack cases configured to accommodate at least one of the cell arrays and arranged in a row,
wherein the cell array is configured to be inserted into the pack case in a first direction, and
wherein the pack cases are connected in a second direction perpendicular to the first direction.

2. The battery pack of claim 1,
wherein the pack case assembly is configured to be directly mounted to a chassis of a vehicle.

3. The battery pack of claim 1,
wherein the pack case is configured as a rectangular tube with an opening formed at a front or rear side facing the first direction.

4. The battery pack of claim 3,
wherein the cell array is configured to slide into the pack case through the opening.

5. The battery pack of claim 1,
wherein the pack case is formed using at least one of extrusion, forging, pressing, and casting.

6. The battery pack of claim 1,
wherein the pack cases constituting the pack case assembly are configured to be welded to each other.

7. The battery pack of claim 1,
wherein the pack cases are sequentially coupled so that a size of the pack case assembly is increased in the second direction.

8. The battery pack of claim 1,
further comprising at least one venting valve positioned to pass through at least one venting hole formed in one side of the pack case.

9. The battery pack of claim 8,
wherein the venting valve is configured to penetrate a lower plate of the case.

10. The battery pack of claim 3,
further comprising a cap configured to cover the opening and be attached to and detached from the pack case.

11. The battery pack of claim 10,
further comprising a busbar assembly electrically connected to an electrode lead of the battery cell,
wherein the busbar assembly comprises a busbar terminal positioned below the battery cell and configured to be coupled to the electrode lead.

12. The battery pack of claim 11,
wherein the busbar assembly further comprises a busbar connector configured to connect the busbar terminals disposed in different pack cases, and
wherein the busbar connector is configured to pass through a hole formed in the cap and be connected outside the cap.

13. The battery pack of claim 1,
further comprising a side member configured to be directly coupled to the pack case assembly.

14. The battery pack of claim 13,
wherein the side member is a chassis of a vehicle.

15. A vehicle comprising a battery pack according to any one of claims 1 to 14.

16. A vehicle comprising:
a cell array comprising a plurality of battery cells; and
a pack case assembly comprising a plurality of pack cases configured to accommodate at least one of the cell arrays and arranged in a row,
wherein the cell array is configured to be inserted into the pack case in a first direction,
wherein the pack cases are connected in a second direction perpendicular to the first direction, and
wherein the pack case assembly is configured to be directly mounted to a chassis of the vehicle.

17. The vehicle of claim 16,
wherein the pack case is configured as a rectangular tube with an opening formed at a front or rear side facing the first direction.

18. The vehicle of claim 17,
wherein the cell array is configured to slide into the pack case through the opening.

19. The vehicle of claims 16,
wherein the pack case is formed using at least one of extrusion, forging, pressing, and casting.

20. The vehicle of claim 16,
wherein the pack cases constituting the pack case assembly are configured to be welded to each other.

21. The vehicle of claim 16,
wherein the pack cases are sequentially coupled so that a size of the pack case assembly is increased in the second direction.

22. The vehicle of claim 16,
further comprising at least one venting valve positioned to pass through at least one venting hole formed in one side of the pack case.

23. The vehicle of claim 22,
wherein the venting valve is configured to penetrate a lower plate of the case.

24. The vehicle of claim 17,
further comprising a cap configured to cover the opening and be attached to and detached from the pack case.

25. The vehicle of claim 24,
further comprising a busbar assembly electrically connected to an electrode lead of the battery cell,
wherein the busbar assembly comprises a busbar terminal positioned below the battery cell and configured to be coupled to the electrode lead.

26. The vehicle of claim 25,
wherein the busbar assembly further comprises a busbar connector configured to connect the busbar terminals disposed in different pack cases, and
wherein the busbar connector is configured to pass through a hole formed in the cap and be connected outside the cap.

27. The vehicle of claim 16,
further comprising a side member configured to be directly coupled to the pack case assembly.

28. The vehicle of claim 27,
wherein the side member is a chassis of the vehicle.
